# FASCICULE DE BREVET EUROPEEN

(11) **EP 0 891 916 B1**
(45) Date de publication et mention de la délivrance du brevet: **10.10.2001**
(21) Numéro de dépôt: 98401786.3
(22) Date de dépôt: 16.07.1998
(51) Int. Cl.: B62D 21/11

(54) **Berceau avant de véhicule automobile**
Vorderhilfsrahmen für ein Kraftfahrzeug
Front sub-frame for a motor vehicle

(30) Priorité: 18.07.1997 FR 9709101
(43) Date de publication de la demande: 20.01.1999
(73) Titulaire: AUTOMOBILES PEUGEOT, 75116 Paris (FR); AUTOMOBILES CITROEN, 92200 Neuilly-sur-Seine (FR)
(72) Inventeur: Galtier, Lucien, 91390 Morsang sur Orge (FR); Sirou, Marc, 91310 Longpont/Orge (FR)
(74) Mandataire: Gendraud, Pierre

(56) Documents cités:
- DE-A- 2 627 902
- GB-A- 2 207 100

## Description

L'invention concerne un berceau support d'organes de véhicule automobile.

Elle se rapporte plus particulièrement à un berceau avant sur lequel sont préassemblées diverses pièces dites de liaison au sol telles que des éléments de suspension ou de direction du véhicule automobile et qui présente les caractéristiques mécaniques suffisantes, notamment en compression, pour permettre de préserver l'habitacle, lors d'une éventuelle collision frontale.

Ce genre de berceau, généralement constitué de deux parties, supérieure et inférieure, liées entre elles en périphérie par soudure, a pour rôle principal d'assurer la géométrie et le maintien des pièces de liaison au sol dans le véhicule et par conséquent présente une bonne rigidité notamment transversale par rapport au véhicule.

Des réglementations et des normes relatives au choc frontal qu'un véhicule automobile est susceptible de subir imposent également que le berceau présente une grande résistance en compression, en général supérieure à celle nécessitée pour la liaison au sol en direction longitudinale.

Une solution permettant de satisfaire ces caractéristiques mécaniques consiste à augmenter l'épaisseur des tôles du berceau. Or, il s'avère qu'une telle solution présente divers inconvénients: d'une part l'emploi de presses lourdes et coûteuses pour l'emboutissage de ces tôles, et d'autre part une forte augmentation de la masse du berceau.

Le document DE 26 27 902 sert de base à la revendication 1 et décrit une traverse de berceau comprenant une tôle fermée dans laquelle sont disposés des éléments de renfort à section carré en contact direct avec celle-ci.

Le but de la présente invention est de proposer un berceau support d'organes qui soit particulièrement résistant en compression dans la direction longitudinale du véhicule, et dont la masse et le coût ne soient pas excessifs.

A cet effet, la présente invention concerne un berceau avant de véhicule automobile, selon la revendication 1.

Selon quelques dispositions intéressantes de l'invention :
- le moyen de renfort est une barre au moins en majeure partie tubulaire ;
- le moyen de renfort comporte à l'avant une partie centrale transversale au véhicule, reliée par deux cintrages opposés respectivement à deux parties latérales inclinées vers l'arrière formant deux branches aboutissant chacune à une entretoise de fixation arrière du berceau ;
- les deux cintrages sont disposés respectivement devant et contre deux entretoises verticales serrées entre la semelle et la paroi supérieure ;
- ces entretoises sont tubulaires et traversées axialement chacune par une vis de fixation d'un boîtier de direction ;
- la barre est pourvue au droit de chaque cintrage d'un gousset de renfort rendu solidaire de l'une des entretoises de fixation du boîtier de direction. ;
- chacune des branches comporte une partie arrière constituée par un barreau cylindrique et une partie avant tubulaire recevant l'extrémité avant du barreau ;
- le moyen de renfort est maintenu en hauteur par l'intermédiaire d'au moins deux pattes disposées de part et d'autre du plan médian, chacune de ces pattes étant soudée d'une part sur le moyen de renfort et d'autre part sur le berceau ;
- la paroi supérieure et la semelle sont pourvues de déformations locales respectives disposées en vis-à-vis et prenant la forme extérieure de la barre de manière à maintenir celle-ci à une hauteur définie.

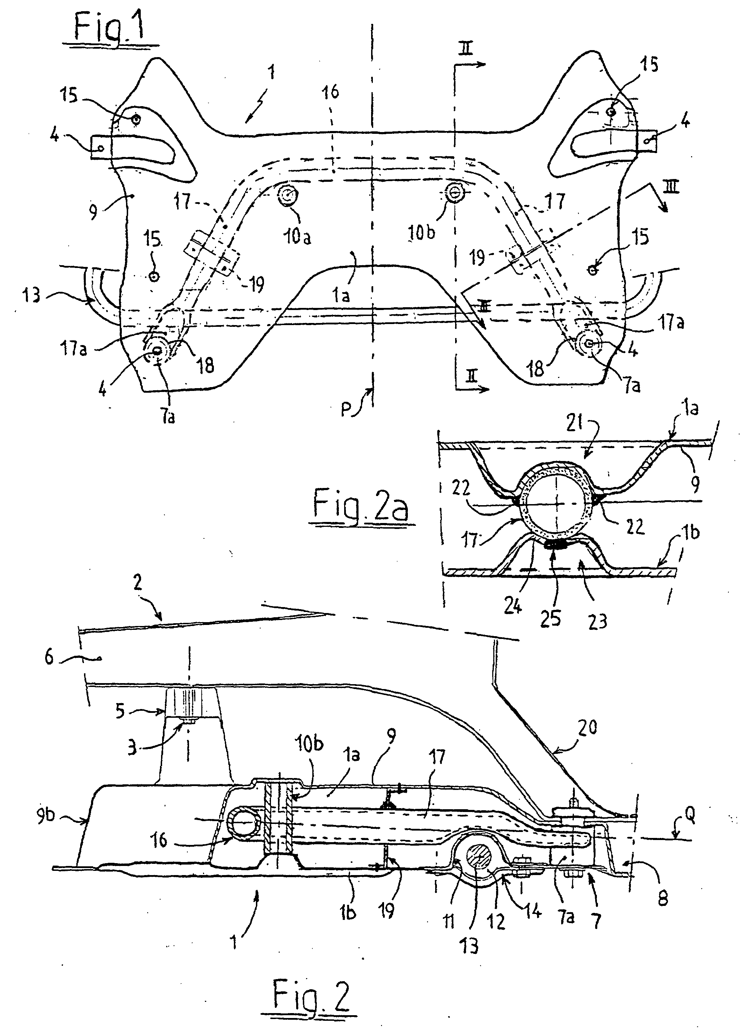

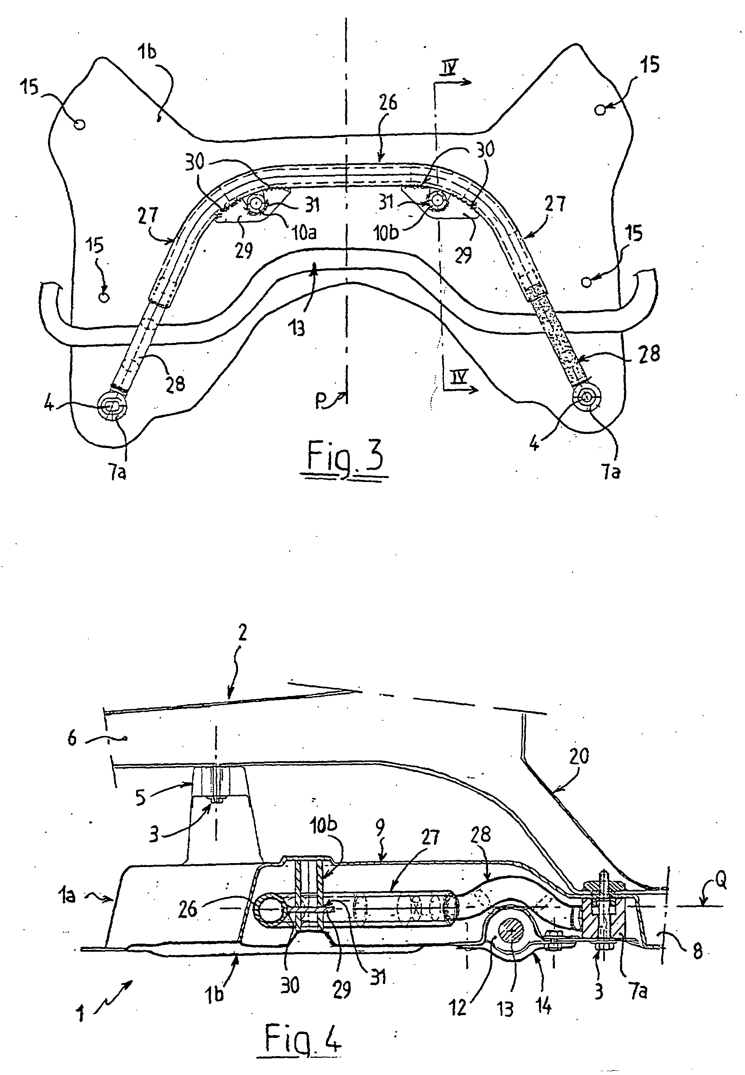

L'invention sera mieux comprise et d'autres caractéristiques et avantages de celle-ci apparaîtront plus clairement au cours de la description explicative qui va suivre faite en référence aux dessins schématiques annexés donnés uniquement à titre d'exemple illustrant plusieurs modes de réalisation de l'invention et dans lesquels:
→ la figure 1 est une vue de dessus d'un berceau avant support d'organes d'un véhicule automobile selon l'invention ;
→ la figure 2 est une vue en coupe suivant la ligne II - II de la figure 1, monté sur la caisse d'un véhicule ;
→ la figure 2a est une section suivant la ligne III - III de la figure 1 d'une variante de fixation ;
→ la figure 3 est une vue de dessus d'un berceau avant selon un second mode de réalisation sans la paroi supérieure constituant celui-ci ; et
→ la figure 4 est une vue en coupe suivant la ligne IV - IV de la figure 3, du berceau monté sur la caisse d'un véhicule.

En se rapportant aux figures 1 et 2, on a représenté un berceau avant 1 équipé de diverses pièces de liaison au sol du train avant d'un véhicule automobile et relié à une caisse 2 de ce véhicule de façon connue par des moyens de fixation 3 du type boulons traversant le berceau 1 par des orifices 4 prévus dans ce dernier.

Le berceau 1 est constitué de deux parties ; d'une part d'une traverse supérieure 1a, de forme générale en U, pourvue d'une paroi supérieure 9 et de parois latérales 9b, et d'autre part d'une semelle 1b de profil sensiblement plan et parallèle au sol, qui sont assemblées l'une à l'autre par un cordon de soudure en périphérie non représenté.

On notera que les points de fixation du berceau sur la caisse 2 sont répartis, classiquement de part et d'autre d'un plan vertical P représentant le plan médian du véhicule, notamment par deux fixations 5 à l'avant qui sont liées aux brancards 6 avant de caisse, comme visible à la figure 2, et par deux fixations 7 à l'arrière liées au plancher 8 d'un habitacle du véhicule et constituées d'une entretoise 7a disposée verticalement entre la paroi 9 et la semelle 1b.

Le berceau 1 ainsi réalisé présente comme visible sur la figure 2, une section transversale sensiblement rectangulaire et creuse.

La traverse 1a est pourvue d'une paroi supérieure 9 sur laquelle repose un boîtier de direction, non représentée, recevant une crémaillère transversale au véhicule et fixée par deux vis traversant le berceau par des entretoises tubulaires 10a,10b serrées entre la semelle 1b et la paroi 9.

La semelle 1b comporte, comme visible à la figure 2, un logement 11 apte à recevoir l'un des deux paliers 12 d'une barre anti-devers 13. Chacun des paliers 12 est maintenu par une bride de fixation 14 fixée par des moyens connus de fixation du type visserie.

Le berceau 1 comporte également dans ses parois latérales 9b parallèles au plan médian P du véhicule des ouvertures classiques, non représentées, pour permettre le passage des extrémités d'un triangle de suspension inférieur qui est lié au berceau, par des articulations fixées entre la traverse supérieure et la semelle, par deux vis traversant le berceau respectivement par une entretoise tubulaire, non représentée, interposée entre la paroi 9 et la semelle 1b, au droit de trous 15 pratiqués dans celle-ci.

Selon la présente invention, le berceau 1 est pourvu entre la paroi 9 et la semelle 1b d'un moyen de renfort 16 afin d'augmenter sa résistance à l'écrasement en direction longitudinale lors d'un choc frontal du véhicule.

Ce moyen de renfort est constitué d'une barre 16, de préférence tubulaire, à partie centrale transversalement au véhicule disposé juste devant des entretoises 10a,10b de fixation d'un boîtier de direction et qui est cintré en forme de C, de part et d'autre de ces entretoises, vers l'arrière en formant deux branches 17 qui sont inclinées et dirigées le plus droit possible vers les entretoises 7a de fixation arrière du berceau 1 sur la caisse 2 du véhicule.

L'extrémité 17a de chacune des branches 17 est légèrement aplatie et est pourvue d'un évidement 18 apte à enfourcher partiellement l'entretoise de fixation 7a et est fixée à cette dernière par soudure. La barre est maintenue en hauteur au moyen d'au moins deux pattes 19 disposées de part et d'autre du plan médian P, chacune de ces pattes 19 étant soudée d'une part sur la barré -ou tube- 16 et d'autre part sur le berceau 1, comme visible à la figure 2. La barre 16 s'étend sensiblement dans le prolongement avant longitudinal du plancher, c'est-à-dire au voisinage d'un plan horizontal Q sensiblement confondu avec le plancher avant 8, de manière à permettre le meilleur passage des efforts longitudinaux par le plancher 8 qui est positionné en bas de caisse 2 et qui présente une résistance importante à l'écrasement.

Ainsi, avantageusement, en cas de collision frontale, le passage des efforts s'effectue sensiblement dans un même plan Q, évitant le risque de créer des couples d'efforts résistants qui pourraient déformer le tablier 20 du véhicule et faire reculer dans l'habitacle un pédalier habituellement fixé au tablier.

Dans une variante de fixation de la barre 16 en hauteur, représentée à la figure 2a, la traverse la comporte sur la paroi supérieure 9 au moins une déformation 21 locale prenant la forme extérieure du tube 16 de telle sorte que ce dernier soit positionné à l'intérieur lors du montage et fixé à celle-ci par des cordons de soudure 22. La semelle 1b est également pourvue d'une déformation 23 de manière à former une proéminence 24 vers l'intérieur du berceau permettant de maintenir le tube 16 à une hauteur définie. Une soudure 25, dite « soudure bouchon », maintient le tube 16 sur la semelle 1b après assemblage de celle-ci avec la paroi 9. Ces déformations 21 et 23 réalisées en vis-à-vis permettent de coiffer, lors de l'assemblage de la paroi 9 et de la semelle, le tube 16 et de l'immobiliser dans une position en hauteur adéquate.

On a représenté aux figures 3 et 4, un second mode de réalisation de l'invention, les éléments identiques aux figures 1 et 2 comportent, dans un souci de simplification de la description, les mêmes références.

Le moyen de renfort 16 est constitué d'un tube 26 pourvu d'une partie centrale transversalement au véhicule disposé juste devant des entretoises 10a, 10b de fixation d'un boîtier de direction et qui est cintré au droit de ces entretoises 10a, 10b vers l'arrière du véhicule délimitant ainsi deux branches 27.

Chacune des branches 27 est prolongée jusqu'aux entretoises 7a de fixation arrière du berceau 1 par un barreau cylindrique 28.

L'extrémité avant de ce barreau 28 est emmanché et soudé dans la partie terminale arrière associée du tube 26, et l'autre extrémité est soudée à l'une des entretoises 7a de fixation arrière du berceau. Le barreau est légèrement cintré vers le haut, dans un plan vertical, au droit du palier 12 de la barre anti-dévers 13, comme visible à la figure 4, afin de permettre le passage de cette dernière.

Le tube 26 est pourvu au niveau de chaque cintrage d'un gousset 29 de renfort maintenu par un cordon de soudure 30. Chacun des goussets 29 est fixé par soudure 31 à l'entretoise 10a,10b qui lui correspond comme visible sur les figures 3 et 4.

Un tel moyen de renfort présente l'avantage de pouvoir être dimensionné suivant la masse du véhicule en intervenant sur le diamètre extérieur, l'épaisseur, la forme et la matière du tube creux, plein ou partiellement plein, de combiner également les différents matériaux afin de définir un berceau qui satisfasse parfaitement les réglementations et les normes de sécurité passive en cas de choc frontal.

On comprend aisément à la lecture de la description ci-dessus qu'un berceau ainsi conçu permet de répondre de manière satisfaisante aux critères mécaniques nécessaires en cas de-choc frontal sans entraîner un coût excessif, par des moyens simples qui n'engendrent pas une augmentation de la masse importante.

## Revendications

1. Berceau avant (1) de véhicule automobile, sur lequel sont fixés des organes de liaison au sol, constitué d'une traverse (1a) pourvue d'une paroi supérieure (9) et d'une semelle (1b),et relié à la caisse (2) du véhicule à l'avant à deux brancards latéraux (6), ledit berceau comportant un moyen de renfort (16; 26) formant une barre (16), interposée entre la paroi supérieure (9) et la semelle (1b)
**caractérisé en ce que** ladite barre (16) est fixée à l'arrière au plancher (8) d'un habitacle de véhicule par des éléments de fixation disposés de part et d'autre du plan vertical médian (P) du véhicule,
et que ladite barre (16) est disposée sensiblement au niveau du plancher (8).

2. Berceau selon la revendication 1,
**caractérisé en ce que** le moyen de renfort (16; 26) est une barre au moins en majeure partie tubulaire.

3. Berceau selon l'une des revendications 1 à 2,
**caractérisé en ce que** le moyen de renfort (16; 26) comporte à l'avant une partie centrale transversale au véhicule, reliée par deux cintrages opposés respectivement à deux parties latérales inclinées vers l'arrière formant deux branches (17; 27) aboutissant chacune à une entretoise (7a) de fixation arrière du berceau (1).

4. Berceau selon la revendication 3,
**caractérisé en ce que** les deux cintrages sont disposés respectivement devant et contre deux entretoises verticales (10a, 10b) serrées entre la semelle (1b) et la paroi supérieure (9).

5. Berceau selon la revendication 4,
**caractérisé en ce que** lesdites entretoises verticales (10a, 10b) sont tubulaires et traversées axialement chacune par une vis de fixation d'un boîtier de direction.

6. Berceau selon l'une des revendications 3 à 5,
**caractérisé en ce que** la barre (26) est pourvu au droit de chaque cintrage d'un gousset de renfort (29) rendu solidaire de l'une des entretoises (10a, 10b) de fixation d'un boîtier de direction.

7. Berceau selon l'une des revendications 3 à 6,
**caractérisé en ce que** chacune des branches (27) comporte une partie arrière constituée par un barreau cylindrique (28) et une partie avant tubulaire recevant l'extrémité avant du barreau.

8. Berceau selon l'une des revendications précédentes,
**caractérisé en ce que** le moyen de renfort (16) est maintenu en hauteur par l'intermédiaire d'au moins deux pattes (19) disposées de part et d'autre du plan médian (P), chacune de ces pattes (19) étant soudée d'une part sur le moyen de renfort (16) et d'autre part sur le berceau (1).

9. Berceau selon l'une des revendications précédentes,
**caractérisé en ce que** la paroi supérieure (9) et la semelle (1b) sont pourvues de déformations locales (21, 23) respectives disposées en vis-à-vis et prenant la forme extérieure de la barre (16) de manière à maintenir celle-ci à une hauteur définie.

## Patentansprüche

1. Vorderhilfsrahmen (1) für ein Kraftfahrzeug, an dem Mittel zur Verbindung mit dem Boden befestigt sind, bestehend aus einem Querträger (1a), der mit einer oberen Wand (9) und einer Bodenplatte (1b) versehen und vorne mit dem Fahrzeuggehäuse (2) an zwei Längsträgern (6) verbunden ist, wobei der Hilfsrahmen eine Verstärkungseinrichtung (16; 26) umfasst, die eine zwischen der oberen Wand (9) und der Bodenplatte (1b) eingefügte Stange (16) bildet,
**dadurch gekennzeichnet, dass** die Stange (16) mithilfe von zu beiden Seiten der vertikalen Mittelebene (P) angeordneten Befestigungsmitteln hinten an der Bodengruppe (8) einer Fahrzeugkabine befestigt und dass die Stange (16) im Wesentlichen an der Bodengruppe (8) angeordnet ist.

2. Hilfsrahmen nach Anspruch 1, **dadurch gekennzeichnet, dass** die Verstärkungseinrichtung (16; 26) eine zumindest größtenteils rohrförmige Stange ist.

3. Hilfsrahmen nach Anspruch 1 oder 2, **dadurch gekennzeichnet, dass** die Verstärkungseinrichtung (16; 26) vorne einen quer zum Fahrzeug verlaufenden mittleren Abschnitt besitzt, der über zwei gegenüberliegende Wölbungen mit zwei nach hinten geneigten Seitenteilen verbunden ist, welche zwei Zweige (17; 27) formen, die jeweils in einem Querstück (7a) zur hinteren Befestigung des Hilfsrahmens (1) enden.

4. Hilfsrahmen nach Anspruch 3, **dadurch gekennzeichnet, dass** die beiden Wölbungen vor beziehungsweise an den beiden vertikalen Querstücken (10a, 10b) vorgesehen sind, die zwischen der Bodenplatte (1b) und der oberen Wand (9) angeordnet sind.

5. Hilfsrahmen nach Anspruch 4, **dadurch gekennzeichnet, dass** die vertikalen Querstücke (10a, 10b) rohrförmig sind und axial jeweils von einer Befestigungsschraube eines Lenkgehäuses durchquert werden.

6. Hilfsrahmen nach einem der Ansprüche 3 bis 5, **dadurch gekennzeichnet, dass** die Stange (26) dicht an jeder Wölbung mit einem Verstärkungsstück (29) versehen ist, das mit einem der Querstücke (10a, 10b) zur Befestigung eines Lenkgehäuses fest verbunden ist.

7. Hilfsrahmen nach einem der Ansprüche 3 bis 6, **dadurch gekennzeichnet, dass** jeder der Zweige (27) einen hinteren Abschnitt aufweist, der von einem zylindrischen Stab (28) und einem rohrförmigen vorderen Teil gebildet wird, welches das vordere Ende des Stabs aufnimmt.

8. Hilfsrahmen nach einem der vorhergehenden Ansprüche, **dadurch gekennzeichnet, dass** die Verstärkungseinrichtung (16) von mindestens zwei zu beiden Seiten der Mittelebene (P) angeordneten Lappen (19) gehalten wird, wobei die Lappen (19) zum einen an der Verstärkungseinrichtung (16) und zum anderen am Hilfsrahmen (1) angeschweißt sind.

9. Hilfsrahmen nach einem der vorhergehenden Ansprüche, **dadurch gekennzeichnet, dass** die obere Wand (9) und die Bodenplatte (1b) mit örtlichen Verformungen (21, 23) versehen sind, die einander jeweils gegenüber liegen und die äußere Form der Stange (16) haben, sodass sie diese auf einer festgelegten Höhe halten.

## Claims

1. Front sub-frame (1), for a motor vehicle, to which are fixed members for connection to the ground, consisting of a cross member (1a) provided with an upper wall (9) and a sole plate (1b), and connected to the body (2) of the vehicle at the front to two lateral shafts (6), said sub-frame having a reinforcing means (16; 26) forming a rod (16), interposed between the upper wall (9) and the sole plate (1b),
**characterised in that** said rod (16) is fixed at the rear to the floor (8) of a vehicle passenger compartment by fixing elements situated on each side of the vertical median (P) of the vehicle,
and **in that** said bar (16) is disposed substantially level with the floor (8).

2. Sub-frame according to Claim 1,
**characterised in that** the reinforcing means (16; 26) is a rod which is at least for the major part tubular.

3. Sub-frame according to one of Claims 1 to 2,
**characterised in that** the reinforcing means (16; 26) has at the front a central part transverse to the vehicle, connected by two opposite curved parts respectively to two lateral parts inclined towards the rear forming two arms (17; 27) each ending at a brace (7a) for the rear fixing of the sub-frame.

4. sub-frame according to Claim 3,
**characterised in that** the two curved parts are situated respectively in front of and against two vertical braces (10a, 10b) clamped between the sole plate (1b) and the upper wall (9).

5. Sub-frame according to Claim 4,
**characterised in that** said vertical braces (10a, 10b) are tubular and each have a screw for fixing a steering box passing axially through them.

6. Sub-frame according to one of Claims 3 to 5,
**characterised in that** the rod (26) is provided, in line with each curved part, with a reinforcing gusset (29) fixed to one of the braces (10a, 10b) for fixing a steering box.

7. Sub-frame according to one of Claims 3 to 6,
**characterised in that** each of the arms (27) has a rear part consisting of a cylindrical bar (28) and a tubular front part receiving the front end of the bar.

8. Sub-frame according to one of the preceding Claims,
**characterised in that** the reinforcing means (16) is maintained in height by means of at least two lugs (19) disposed on each side of the median (P), each of the lugs (19) being welded on the one hand to the reinforcing means (16) and on the other hand to the sub-frame (1)

9. Sub-frame according to one of the preceding Claims,
**characterised in that** the upper wall (9) and the sole plate (1b) are provided with respective local deformations (21, 23) disposed opposite each other and taking the external form of the rod (16) so as to maintain the latter at a given height.
